# EUROPEAN PATENT SPECIFICATION

(11) **EP 2 429 749 B1**
(45) Date of publication and mention of the grant of the patent: **12.06.2013**
(21) Application number: 10712268.1
(22) Date of filing: 01.04.2010
(51) Int. Cl.: B23D 45/04, B23D 47/04, B23D 47/12, B23D 59/00, B28D 1/04, B28D 7/02, F16P 1/02, F16P 3/02

(54) **IMPROVED ABRASIVE SAW**
VERBESSERTE SCHLEIFSÄGE
SCIE ABRASIVE AMÉLIORÉE

(30) Priority: 01.05.2009 US 174560 P
(43) Date of publication of application: 21.03.2012
(73) Proprietor: Illinois Tool Works Inc., Glenview, IL 60026 (US)
(72) Inventor: WEINGART, John, L., Glenview Illinois 60026 (US); FRESON, Lawrence, L., Glenview Illinois 60026 (US); HART, Michael, F., Glenview Illinois 60026 (US); BUCHANAN, Arnold, Glenview Illinois 60026 (US)
(74) Representative: Meissner, Bolte & Partner
(86) International application number: PCT/US2010/029619
(87) International publication number: WO 2010/126678

(56) References cited:
- WO-A1-95/21043
- DE-U1- 29 505 706
- GB-A- 637 694
- US-A- 2 201 658
- US-A- 3 844 269
- US-A- 4 446 845
- US-A- 4 779 603
- US-A- 5 094 654
- US-B1- 6 932 075

## Description

### BACKGROUND OF THE INVENTION

The present invention relates to an abrasive saw, as per the preamble of claim 1. An example of such a saw is disclosed by US 2201 658 A.

Abrasive saws are used in various industries, but in particular are used in the rough or gross preparation of samples/specimens for examination. For example, specimens such as metals or aggregates (concrete) are often microscopically examined to determine grain structure, composition, failures and the like.

In preparing samples, the samples typically must be cut, polished and mounted for examination. The first part of that preparation process, the cutting, is carried out using a saw. Often, the saw is of the abrasive type (that is, it uses an abrasive wheel in lieu of a toothed blade) and is carried out in a wet process to lubricate, cool and flush the sample and abrasive wheel.

Known saws uses a wheel that is mounted to a pivoting arm that is pulled or urged downward into the sample to perform the cut. The sample is fixedly mounted and secured to a plate or bed of the saw. Among other things, this can result in too great of a force being exerted on the sample (and the blade) which can overheat the sample and blade. This can also result in excessive stress on the saw motor.

In known saws, if serial samples are required to be cut from the same specimen, the specimen must be unsecured (unclamped) from the bed, moved to a proper location beneath the saw blade, and resecured (reclamped) to the bed to carry out the next serial or sequential cut.

In addition, such known saws are often belt driven, but do not have ready means for adjusting the belt to assure proper tension for blade drive.

Accordingly, there is a need for an improved abrasive saw. Such a saw has novel wheel and samples drive systems to improve the mobility of the specimen on the saw bed and to assure good and smooth contact between the abrasive wheel and the sample. Desirably, such a saw also has improved working area/sample access, wear components, and sensor and control features.

### SUMMARY OF THE INVENTION

An abrasive saw as per claim 1, has a cutting wheel for cutting objects mounted thereto, The saw includes a base, a cutting assembly operably mounted to the base and a controller. The cutting assembly includes a pivot shaft, a drive shaft operably mounted to the pivot shaft, a drive, and a drive wheel. The drive is operably connected to the drive shaft and the drive shaft is operably connected to the drive wheel by a flexible drive element or belt to rotate the drive wheel. The drive wheel has the cutting wheel mounted thereto. The pivot shaft is pivotable to move the cutting wheel between a cutting position and a disengaged position.

The drive shaft has an axis of rotation and the drive wheel has an axis of rotation spaced a distance from the drive shaft axis of rotation. The flexible drive element spans the distance between the drive wheel axis of rotation and the drive shaft axis of rotation. The distance between the drive wheel axis of rotation and the drive shaft axis of rotation is variable to increase or decrease a tension in the drive belt.

In a present saw, the drive shaft is disposed within the pivot shaft and rotation of the pivot shaft varies the distance between the drive wheel axis of rotation and the drive shaft axis of rotation. The pivot shaft has a longitudinal axis and the distance between the pivot shaft longitudinal axis and the drive wheel axis of rotation is fixed. The drive shaft is eccentrically disposed within the pivot shaft. Varying the distance between the drive wheel axis of rotation and the drive shaft axis of rotation varies the tension in the belt.

In a present embodiment, the saw includes a feed table operably mounted to the base. A drive is operably connected to the feed table. The feed table is movable forward and rearward in a direction of rotation of the associated cutting wheel to move the object toward and away from the cutting wheel. The cutting wheel is lockable in the cutting position and the feed table, with the object secured thereto, is moved, manually or by operation of the controller, toward the cutting wheel to cut the object.

The saw includes a current sensor circuit that generates a signal to the controller and, upon sensing a predetermined current, the controller slows and/or stops the drive to slow and/or stop movement of the table toward the associated cutting wheel. The controller includes an input for inputting the speed of the table moving toward the associated cutting wheel.

The saw also includes a transverse drive to move the feed table transverse to the direction of rotation of the associated cutting wheel for serially cutting objects. The transverse drive is manually operated.

The saw includes an enclosure enclosing the cutting assembly. A present enclosure has a fully stationary side and an openable front and top panel. A portion of one of the side panels is movable and is operably connected to the front and top panels. The front and top panels are hingedly mounted to one anotherto open as a unitary assembly along with the portion of the side panel. The assembly is openable to provide access to the cutting assembly.

The enclosure includes at least one wear element disposed on the inside of the enclosure, aligned with the direction of rotation of the associated cutting wheel, to prevent erosion of the enclosure.

One or more interlocks prevent operation of the abrasive saw when the enclosure is open. A fluid feed is provided to feed fluid to a shroud covering the cutting wheel.

These and other features and advantages of the present invention will be apparent from the following detailed description, in conjunction with the appended claims.

### BRIEF DESCRIPTION OF THE SEVERAL VIEWS OF THE DRAWINGS

The benefits and advantages of the present invention will become more readily apparent to those of ordinary skill in the relevant art after reviewing the following detailed description and accompanying drawings, wherein:

FIG. 1 is a perspective front view of the improved abrasive saw embodying the present invention, the saw shown with the viewing hood removed for clarity of illustration;

FIG. 2 is a side view of the saw with a portion of the cover removed to show the drive system;

FIG. 3 is a perspective view of the saw wheel arm and drive components;

FIG. 4 is side view of the saw wheel arm showing the eccentric relationship between the drive shaft, pivot shaft and final drive wheel;

FIG. 5A is an enlarged front view of the saw, showing the saw wheel arm in the engaged or cutting position;

FIG. 5B is a view similar to that if FIG. 5A with arm in the disengaged position;

FIG. 6 is a view looking into the drive region and showing the actuating handle and linkage for moving the saw wheel arm between the engaged and disengaged positions;

FIG. 7 is an enlarged view of the arm lock assembly;

FIG. 8 is a view looking transverse along the front of the saw illustrating the feed drive system;

FIG. 9 is a view looking into the saw front and showing the screw drive assembly for the table;

FIG. 10 is a perspective view of the viewing/protective hood in the open position;

FIG. 11 in an exploded view showing the pivot shaft, drive shaft and pivot arm linkage;

FIG. 12 is an exploded view of the X-drive;

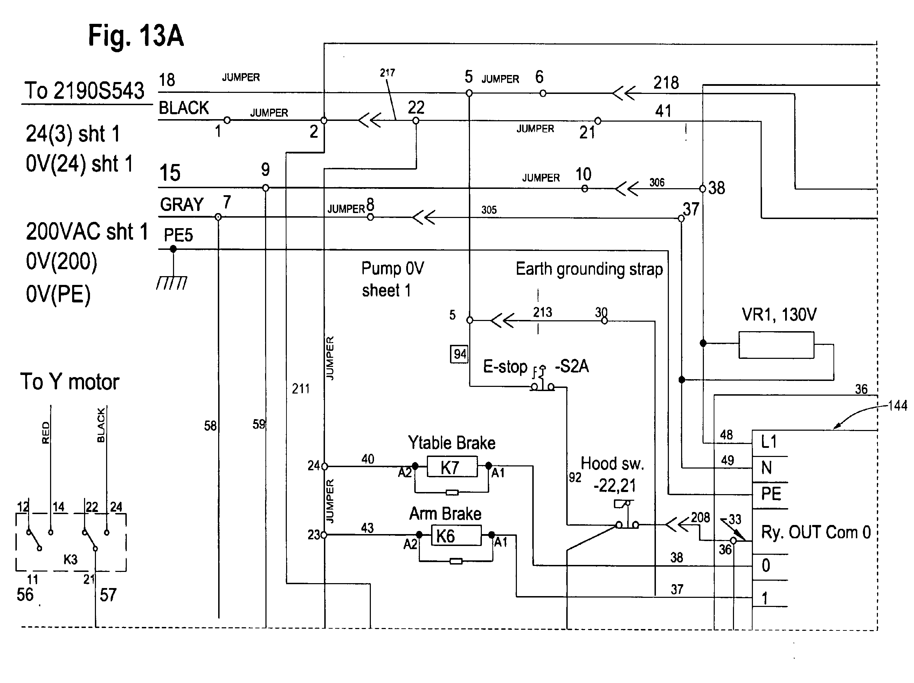

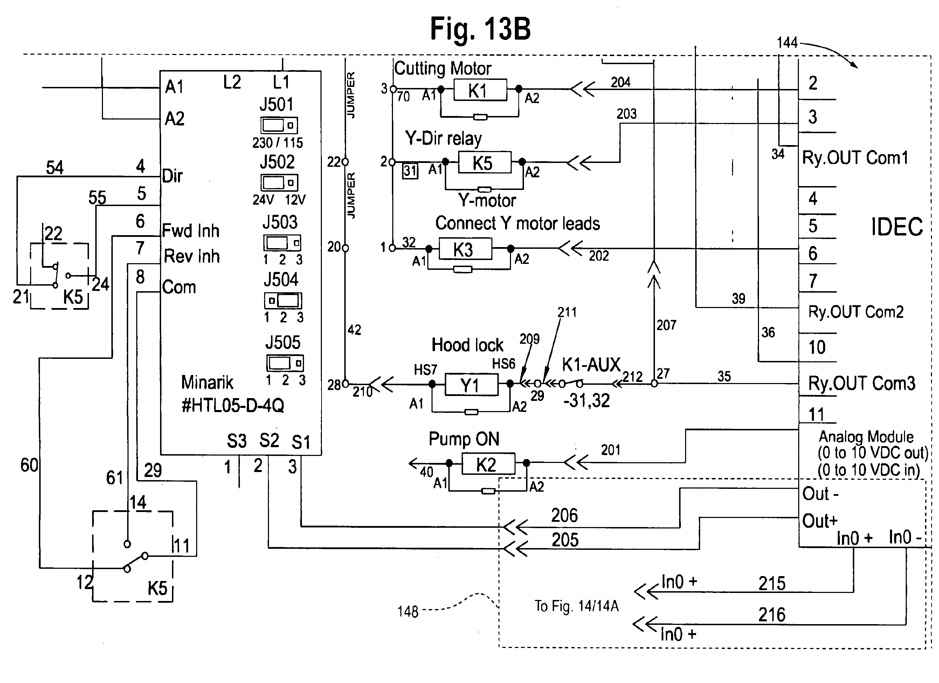

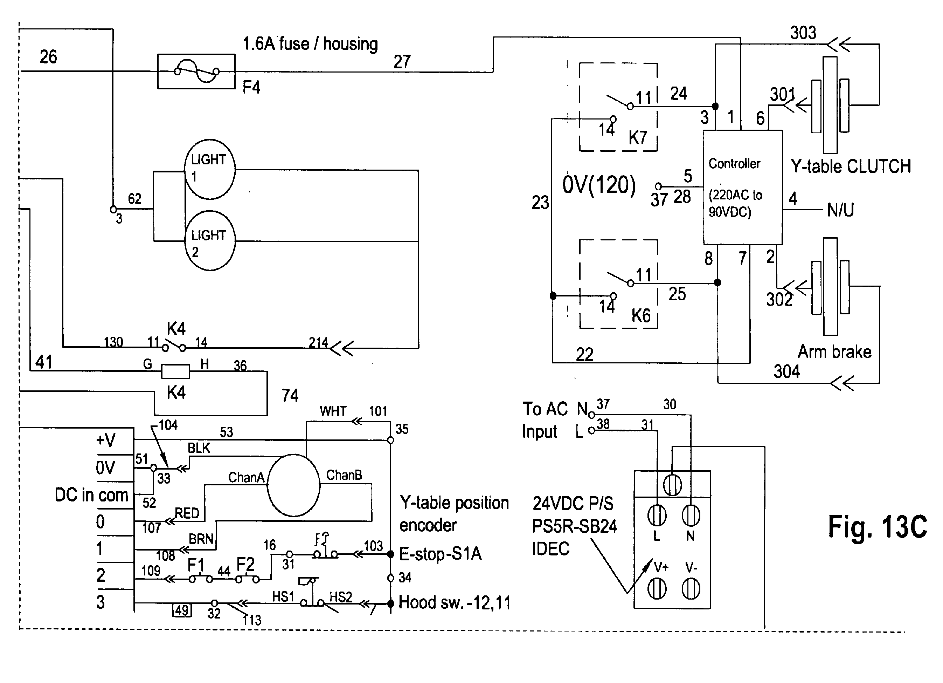

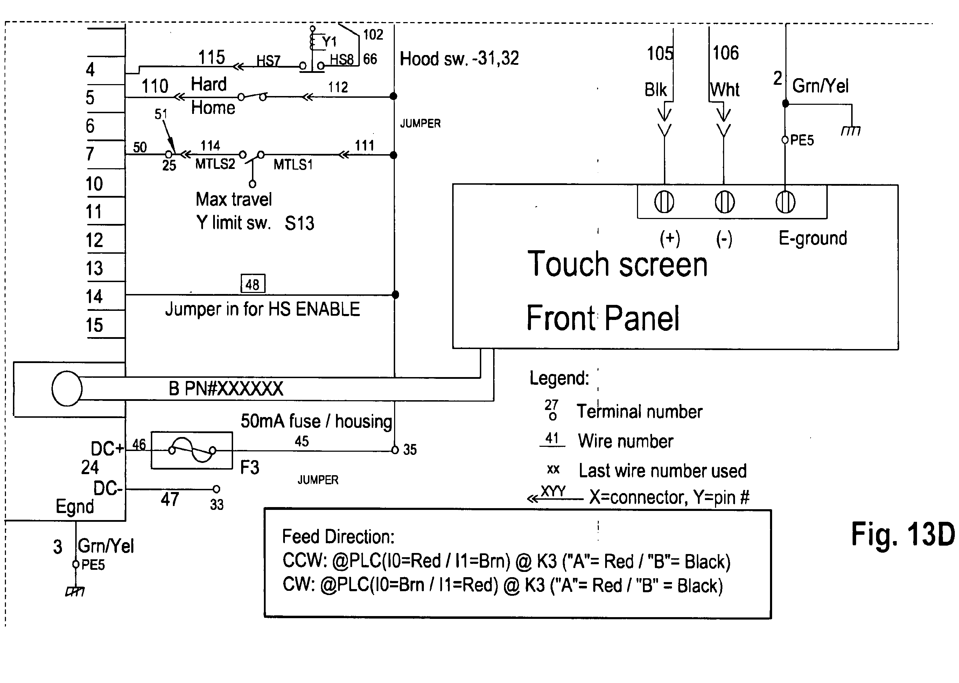

FIGS. 13A-D show an electrical line drawing for the saw; and

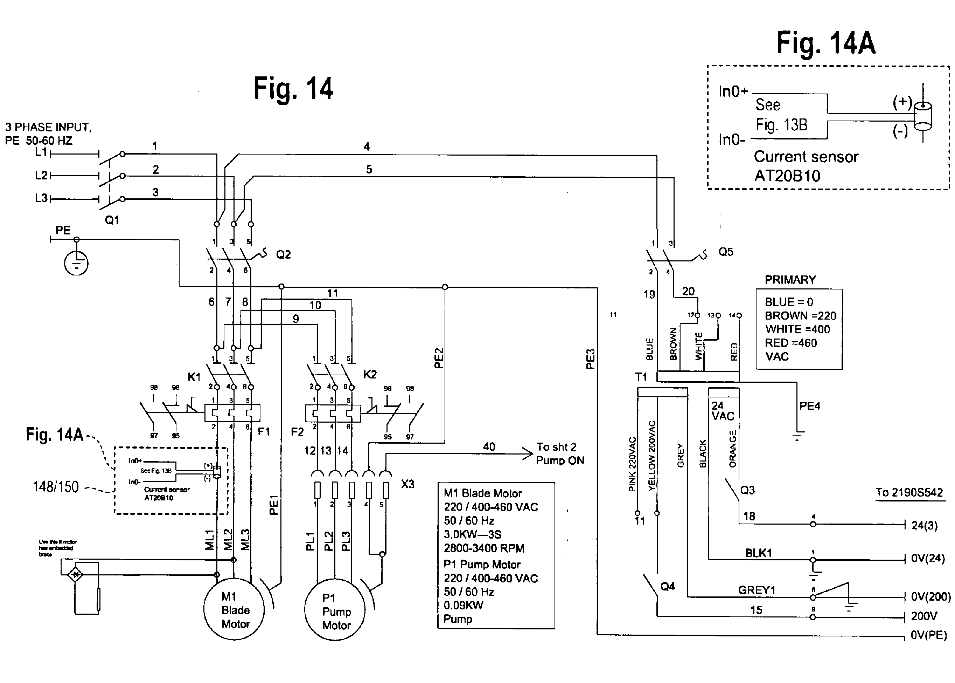

FIG. 14 is a wiring diagram for the saw showing the current sensor.

### DETAILED DESCRIPTION OF THE INVENTION

While the present invention is susceptible of embodiment in various forms, there is shown in the drawings and will hereinafter be described a presently preferred embodiment with the understanding that the present disclosure is to be considered an exemplification of the invention and is not intended to limit the invention to the specific embodiment illustrated.

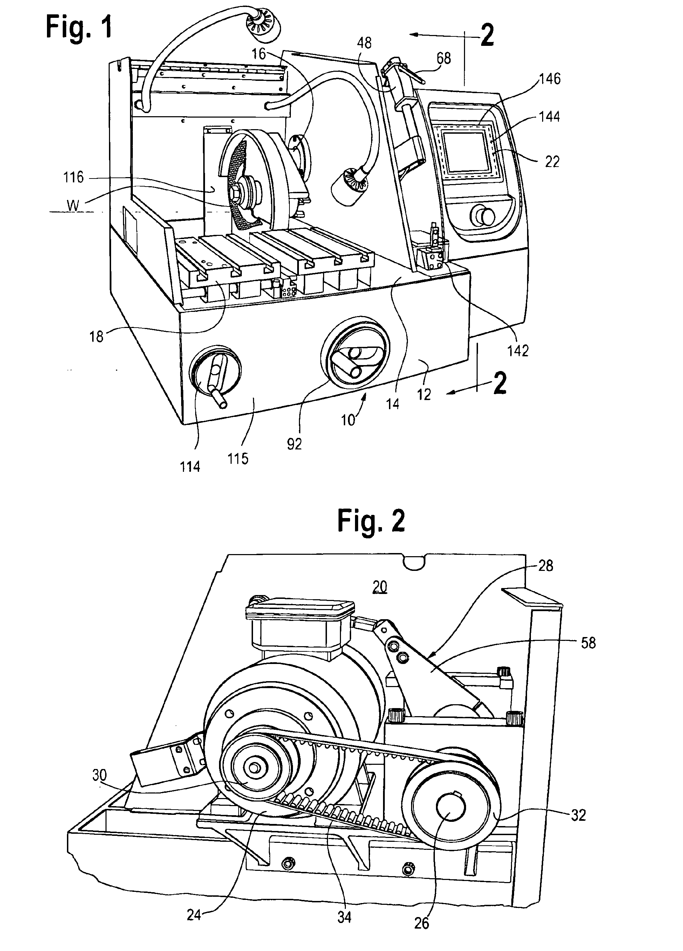

Referring now to the figures and in particular, to FIG. 1, there is shown an improved abrasive saw 10 embodying the principles of the present invention. In this illustration, the saw is shown with the hood and abrasive wheel removed for clarity of illustration. The saw 10 includes, generally, a base 12, a cutting region 14 with an abrasive wheel arm assembly 16 and a feed bed 18, a drive region 20 and a control panel 22.

The drive region 20 is shown in FIG. 2. A wheel drive motor 24 (cutting wheel motor) is connected to a drive shaft 26 that is mounted within a pivot arm assembly 28. A pair of toothed wheels 30, 32 (one on the motor 24 and the other on the shaft 26) and a toothed drive belt 34 permit the transfer of power from the motor 24 to the drive shaft 26. A drive wheel 36 (also toothed) is mounted to the opposite end of the drive shaft 26.

Referring also to FIGS. 2-4 and 6, the drive shaft 26 is mounted within a pivot shaft 38. The pivot shaft 38 is held within a set of bearings 40 to allow the shaft 38 to pivot (rotate) to move the saw wheel W between the disengaged and engaged (cutting) positions. A linkage 42 is used to move (pivot) the shaft 38. An L-shaped arm 44 is mounted at about the heel 46 to pivot. A handle 48 is mounted to one leg 50 of the L-arm 44 and a link bar 52 is mounted to the other leg 54. A lock or brake system 56 is mounted between the saw frame or base 12 and the handle leg 50 of the L-arm 44. The brake 56 is used to lock the linkage 42 into any position once the brake 56 is engaged.

Mounted to the opposite end of the link bar 52 is a pivot shaft clamp 58. The pivot shaft clamp 58 is secured to the pivot shaft 38 and provides the motive force and leverage to pivot the shaft 38 (as the handle 48 is pulled or pushed to engage or disengage the abrasive wheel W, respectively).

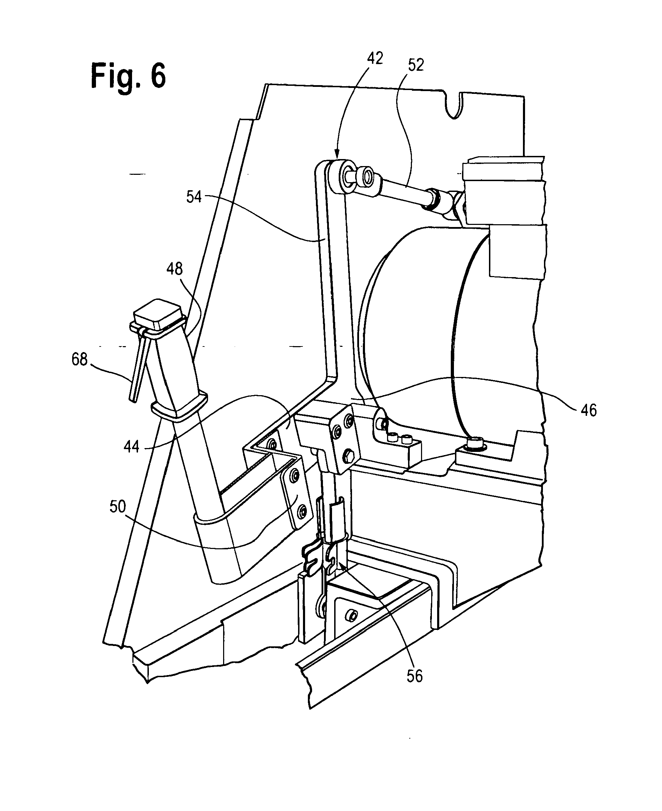

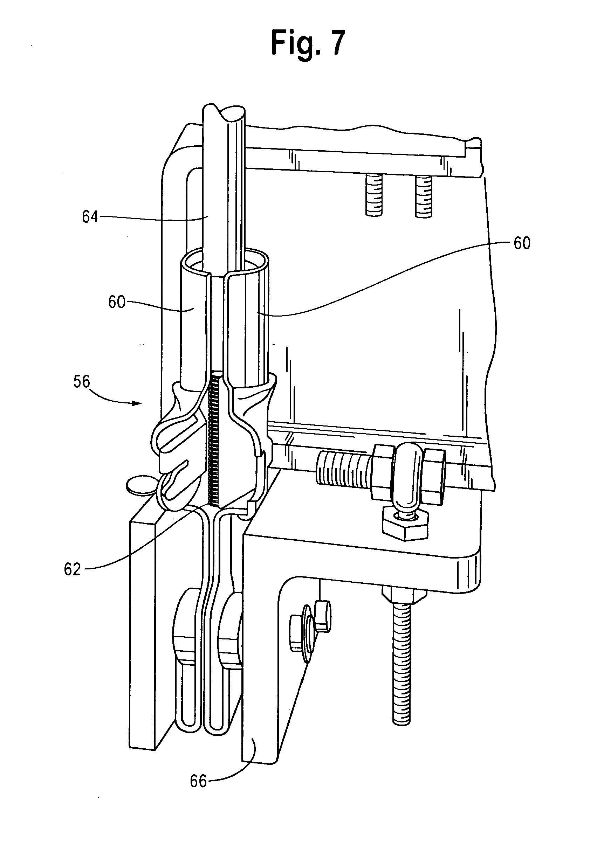

As seen in FIGS. 6 and 7, the lock or brake system 56 includes a split sleeve 60 that is biased (as by a spring 62) inward onto a shaft 64. One end of the shaft 64 is mounted to the L-arm 44 and the other end is mounted in the split sleeve 60. The sleeve 60 is operably mounted to the saw frame or base 12 as indicated at 66. The lock 56 is configured so that when the sleeve 60 is urged opened, the shaft 64 slides or reciprocates within the sleeve 60 and when the sleeve 60 closes, the shaft 64 is secured in the sleeve 60 and prevented from reciprocating (moving). A trigger or grip 68 on the handle 48 is operably connected to the lock 56 to engage and disengage the lock 56.

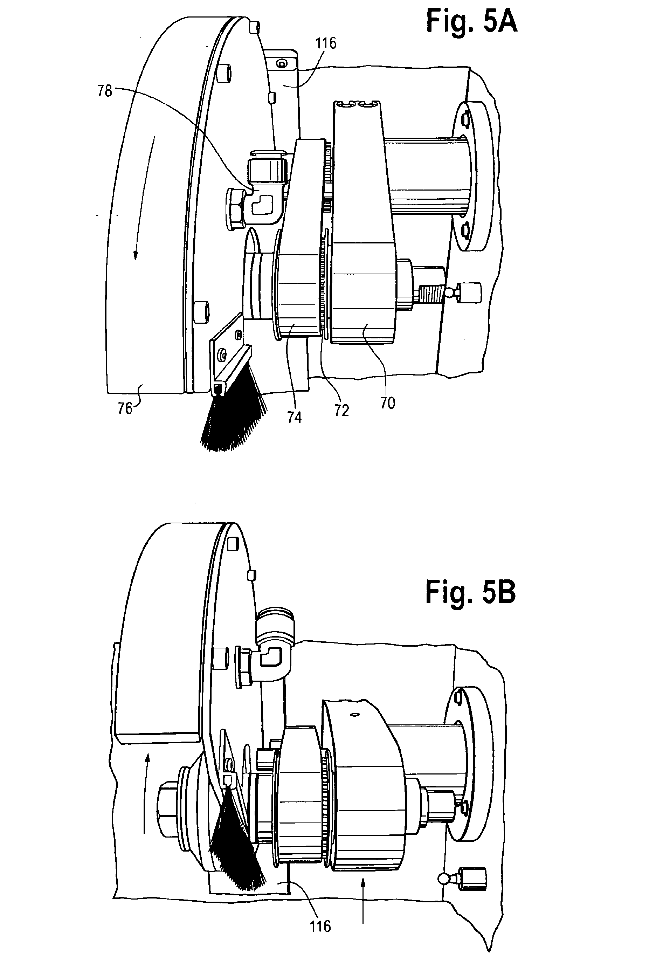

Referring to FIGS. 2-5, as seen in the cutting region 14, the drive wheel 36 is mounted to the end of the drive shaft 26. A saw wheel arm 70 is mounted to the end of the pivot shaft 38. A final drive toothed drive wheel 72 is mounted to an opposite end of the saw wheel arm 70 and a wheel drive belt 74 is positioned around the two drive wheels 36, 72 to transfer power from the drive shaft 26 to the final drive wheel 72. The abrasive wheel W (not shown) is mounted to the final drive wheel 72. FIGS. 5A and 5B show the wheel shroud or cover 76 in place on the saw wheel arm 70. A water nozzle 78 is shown on the shroud 76 to provide a water feed to the wheel W during the cutting operation. A water pump and motor (not shown) supply water to the water nozzle 78.

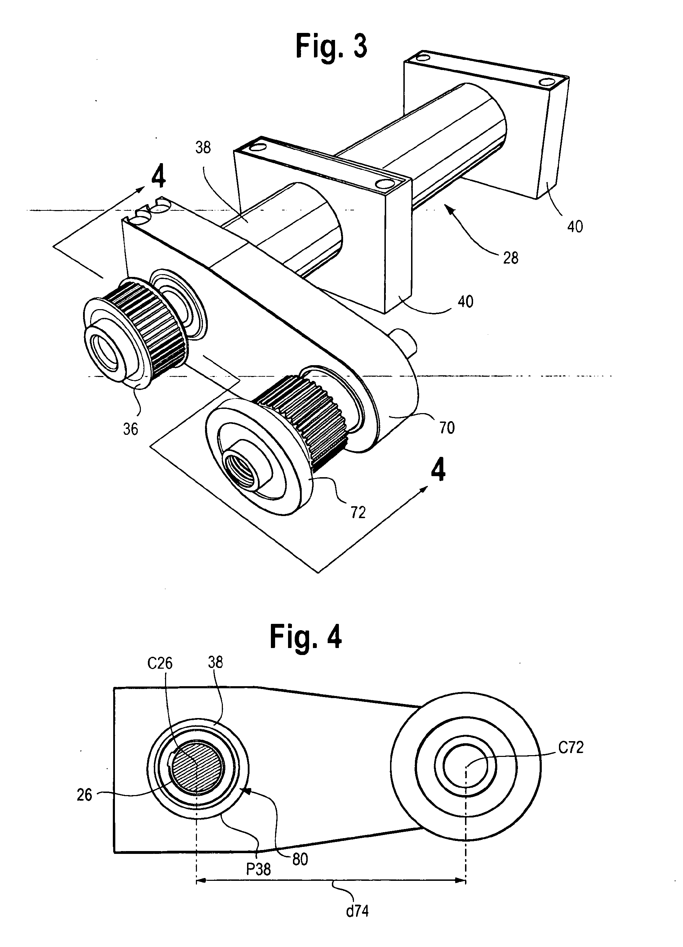

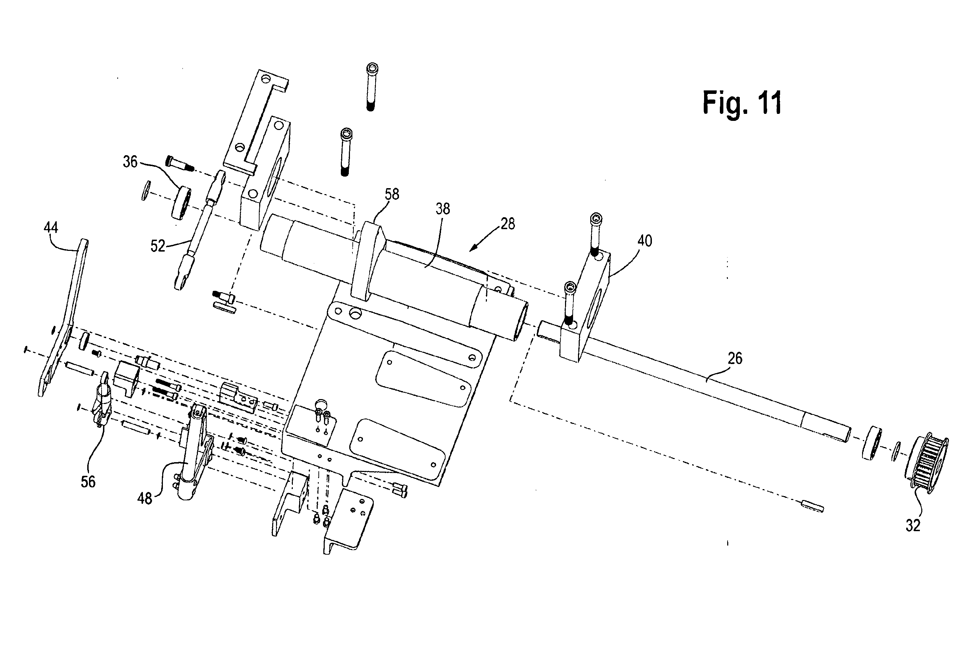

The present saw 10 includes a novel arrangement for providing the proper tension in the wheel drive belt 74. As can be seen in FIGS. 3-4 and 11 (as indicated at 80 in FIG. 4) the drive shaft 26 is eccentrically set within the pivot shaft 38. In this arrangement, the distance d₇₄ from the center of the drive shaft C₂₆ (the position of the center of the drive shaft 26 remains fixed) to periphery of the pivot shaft P₃₈ varies depending upon where the eccentricity lies relative to the center C₂₆ of the drive shaft 26. In effect, the eccentrically mounted shafts 26, 38 serve as a cam surface to increase or decrease the distance d₇₄ between the center of the drive shaft C₂₆ and the center of the final drive wheel C₇₂. This variation or change in distance serves to permit adjusting the tension in the wheel drive belt 74.

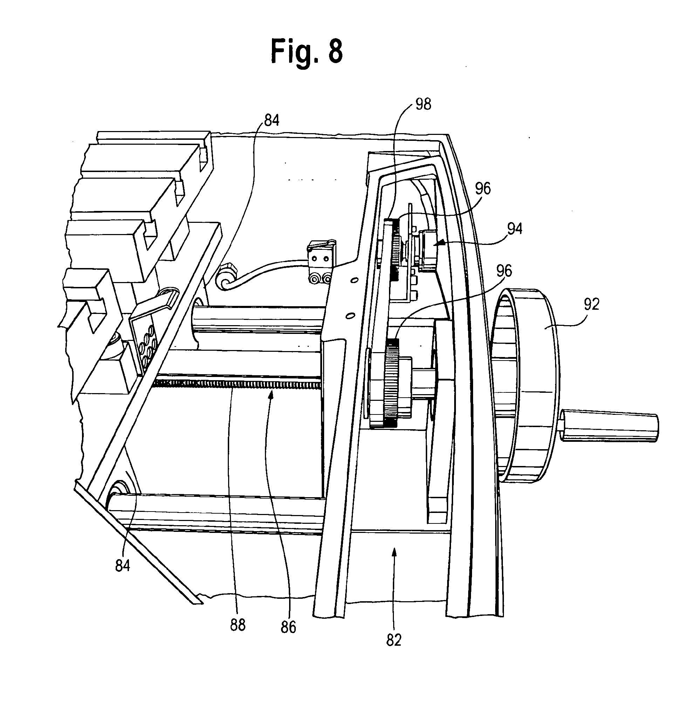

The present saw 10 also includes a novel bed 18 and feed system 82 as seen in FIGS. 1 and 8-9. It will be appreciated that the bed 18 is used to support specimens as they are cut. In a typical saw configuration, the bed is fixed and the saw is brought down (pivoted) into the specimen to carry out the cut. In the present saw 10, in an auto-feed mode of operation (discussed in more detail below), the abrasive wheel W is locked in a cutting position, and the feed system 82 moves the bed 18 with the specimen mounted thereto into the wheel W.

The bed 18 is set on a set of bearings 84 to move toward and away from the wheel W, or into and out of the cutting zone. A screw drive 86 provides the motive force to move the bed 18. This is referred to as a Y-drive (the y-direction of feeding into the wheel W). A worm gear (or screw) 88 is mounted to the saw frame 12 and a receiver gearbox 90 is mounted to the bed 18. To permit manual movement or adjustment of the bed 18 position, a hand crank 92 is mounted to the saw base 12 and is operably connected to the worm gear 88. As will be discussed below, the saw 10 includes a motor and drive assembly 94 (wheels/gears 96 and belts 98) for operation in the auto-feed mode.

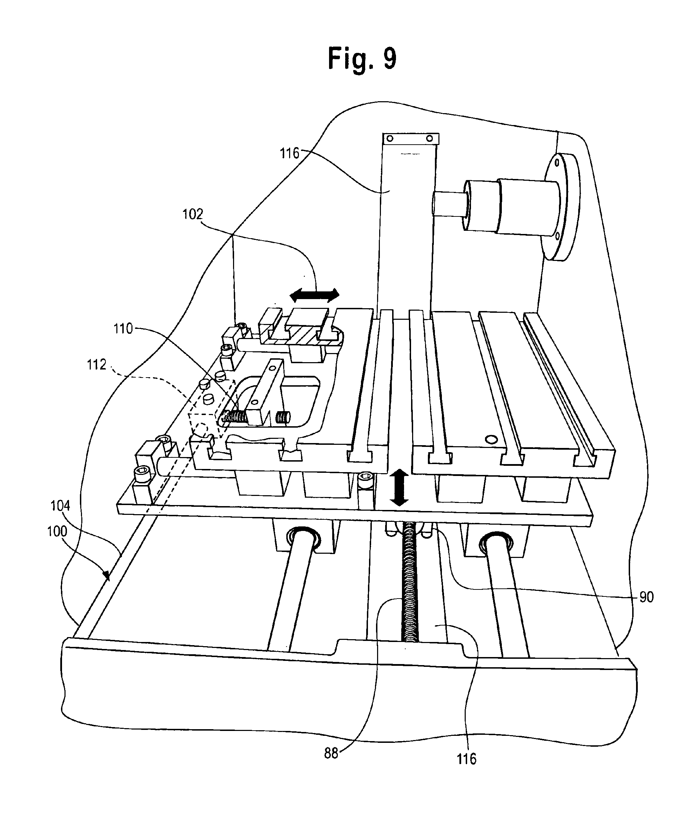

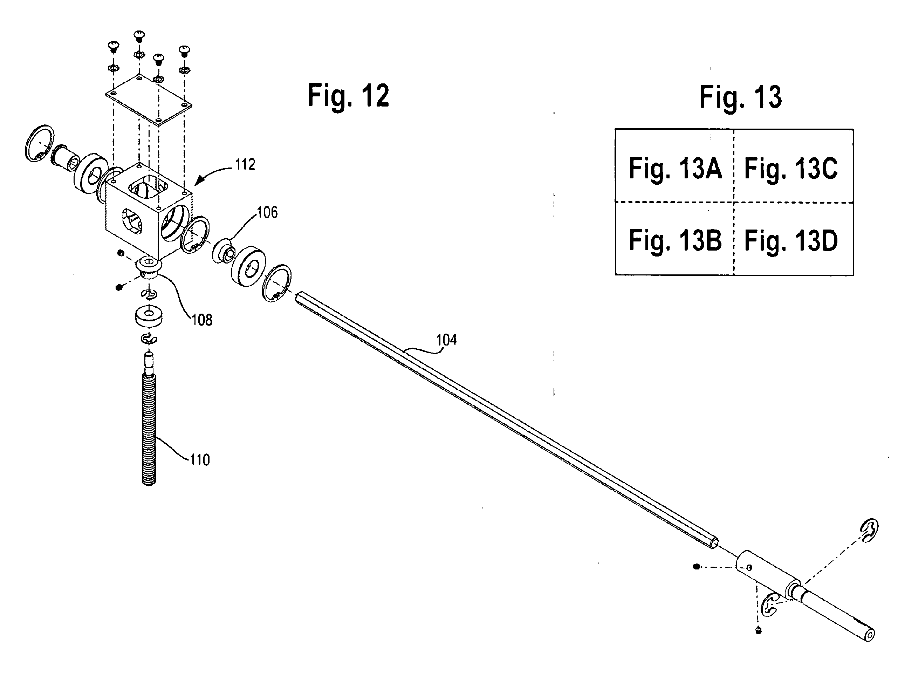

The saw 10 also includes a transverse or X-drive 100 as seen in FIGS. 9 and 12 that moves the bed 18 (and the specimen) transverse to the direction of cutting (as indicated by the arrow at 102). The X-drive assembly 100 includes a shaft 104 (that extends from the front of the saw 10) having a bevel gear 106 mounted to an end thereof. A second bevel gear 108 transfers power to a worm gear 110 to which a gear box 112 (on the bed 18) is meshed. A hand crank 114 on the front 115 of the saw 10 is used to drive or move the bed 18 in the transverse (X) direction. In this manner, sections of specimens can be serially or sequentially cut from a single sample. This eliminates the need to clamp a sample, cut the specimen, unclamp, move and re-clamp the sample, and cut the next specimen. This can be quite time consuming and labor intensive if a number of specimens are needed. The present X-drive 100 permits carrying out multiple cuts from a single clamping of the sample and also permits better and more precise control of the size of the specimen that is cut.

As seen in FIGS. 1, 5A and 9, the present saw 10 includes one or more wear strips 116 mounted to the saw case 117. The wear strips 116 are mounted in alignment with the cutting (saw) wheel W to prevent debris that is generated and ejected from the wheel W during the cutting operation from impinging on the case or housing 117. The wear strips 116 are replaceable and in this manner the wear strip 116 serves as a sacrificial element to prevent excessive damage to or wear of the case 117. In the present saw 10, the wear strip 116 extends up the rear of the case 117 and along the bottom, where debris impingement would be most severe.

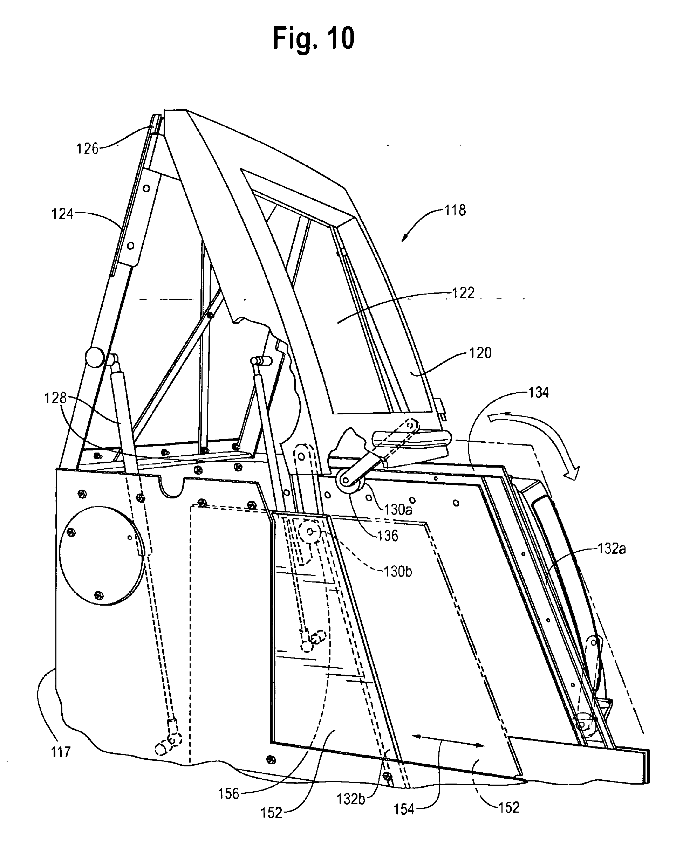

The viewing/protective hood 118 is shown in FIG. 10. The hood 118 includes a front 120 wall having a viewing window 122 and a top wall 124. The front and top walls 120, 124 are hinged 126 to one another. One or more cylinders 128 extend between the hood 118 and the case 117 and are used to assist lifting and lowering, and to dampen movement of the hood 118.

The hood 118 includes guide rollers 130a,b on the front wall 120 that engage tracks 132a,b in the front/side of the case 118. One of the rollers 130a (on the left-hand side) also engages a track 134 along the top of the case 117. The tracks 132a,b and 134 have a T-slot (not shown) formed in them to capture their respective rollers 130a,b. The rollers 130a,b are thus maintained or captured in the front/side tracks 132 to allow the front wall 120 and the top 124 to be rotated up and rearward. A recess 136 in the track 134 is positioned so that the roller guide 130a can reside in the recess 136 to maintain the hood 118 open for access to the cutting region 14. An interlock system 138 (key 140 and receiver 142) isolates power to the saw 10 when the key 140 is removed from the receiver 142, that is, when the hood 118 is open. A portion 152 of the left side panel is configured to slide forward and rearward (as indicated by the arrow at 154) along with the movement of the hood 118. Roller 130b, which resides in track 132b, is, at it reaches the top of the track 132b, captured in a receiver 156 in the panel portion 152. As the front wall 120 is moved rearward, the roller 130b, captured in the receiver 156, moves the panel portion 152 rearward to provide increased access to the cutting region 14. When the hood 118 is closed, the roller 130b (in the receiver 156) moves the panel portion 152 forward to close the panel portion 152.

The saw 10 includes a control system 144 having a touch-pad control panel 22. The control system 144 is microprocessor based and includes a standard (e.g., USB) slot (as at 146) so that new/modified control schemes can be readily installed in the system 144. The touch-pad control panel 22 is configured so that only icons that are needed for any particular mode of operation are displayed. It will be appreciated that any number of different types of control systems 144, panels 22, and the like can be used.

Those skilled in the art will recognize the need to monitor the power that is drawn by the saw 10 (specifically, the wheel motor 24) as one indication of the strain on the motor 24. The present saw 10 includes a powerless or self-powered sensor 148 for monitoring the current drawn by the motor 24. The sensor 148 includes a circuit 150 to convert the current drawn (e.g., 0 to 15A) to a corresponding voltage (e.g. 0 -10V) and provides indication of the current. The current drawn by the wheel drive motor 24 is an indicator of whether the wheel W is being too quickly brought into contact with the specimen.

In auto-feed mode, the feed rate of the specimen is programmed into the controller, 144, as is the length or distance of the cut. In a preferred embodiment, then the sensor 148 senses that the current drawn by the motor 24 is greater than a predetermined level, the table motor 94 is slowed or stopped to prevent damage to the motor 94 or wheel W.

As set forth above, the saw 10 can be operated in manual mode. The specimen is clamped to the bed 18 and the specimen position is adjusted (using the hand cranks to adjust the X and Y directions). Similar to known saws, the wheel W is manually brought down into contact with the specimen by pulling the handle 48 downward. Moving (pivoting) the handle 48 upward disengages the wheel W from the specimen. The hood 118 can then be opened and the specimen removed.

In an auto-feed mode, the specimen is clamped to the bed 18 with the bed in a home position, and the wheel W is pulled downward so that the periphery of the wheel extends below the bed 18 top surface. The lock or brake 56 to maintain the wheel W in this (cutting) position. The saw 10 is set in auto-feed mode by setting the feed rate of the specimen on the control panel 22. The brake 56 prevents the wheel W from "jumping" upward when the specimen contacts the wheel W. The bed 18 then moves from the home position toward the wheel W to feed the specimen into the wheel W. If during cutting the current drawn by the motor 24 is too high, the bed 18 can slow and/or stop (by automatic/controlled operation of the motor and drive assembly 94) to protect the abrasive wheel W and/or motor 24. When the cut is complete, the bed 18 automatically returns to the home position. If the specimen is to be cut serially, the X-drive 100 can be actuated and the specimen repositioned (transversely). The auto-feed sequence can then be reinitiated to perform the next sequential cut.

In the present disclosure, the words "a" or "an" are to be taken to include both the singular and the plural. Conversely, any reference to plural items shall, where appropriate, include the singular.

From the foregoing it will be observed that numerous modifications and variations can be effectuated without departing from the scope of the claims. It is to be understood that no limitation with respect to the specific embodiments illustrated is intended or should be inferred. The disclosure is intended to cover all such modifications as fall within the scope of the claims.

## Claims

1. An abrasive saw (10) having an associated cutting wheel (W) for cutting objects mounted thereto, comprising:
a base (12); and
a cutting assembly operably mounted to the base (12), the cutting assembly including a pivot shaft (38), a drive shaft (26) operably mounted to the pivot shaft, a drive (24), and a drive wheel (72), the drive being operably connected to the drive shaft (26), the drive shaft being operably connected to the drive wheel (72) by a flexible drive element (74) to rotate the drive wheel, the drive wheel (72) having the associated cutting wheel (W) mounted thereto, the pivot shaft (38) being pivotable to move the associated cutting wheel between a cutting position and a disengaged position,
wherein the drive shaft (26) has an axis of rotation and the drive wheel (72) has an axis of rotation spaced a distance from the drive shaft axis of rotation, and wherein the flexible drive element (74) spans the distance between the drive wheel axis of rotation and the drive shaft axis of rotation, and wherein the distance between the drive wheel axis of rotation and the drive shaft axis of rotation is variable to increase or decrease a tension in the flexible drive element, **characterized in that**
the drive shaft (26) is disposed within the pivot shaft (38) and wherein rotation of the pivot shaft varies the distance between the drive wheel axis of rotation and the drive shaft axis of rotation.

2. The abrasive saw in accordance with claim 1 wherein the pivot shaft (38) has a longitudinal axis and wherein a distance between the pivot shaft longitudinal axis and the drive wheel axis of rotation is fixed.

3. The abrasive saw in accordance with claim 1 wherein the drive shaft (26) is eccentrically disposed within the pivot shaft (38).

4. The abrasive saw in accordance with claim 1 wherein the flexible drive element (74) is a drive belt, and wherein varying the distance between the drive wheel axis of rotation and the drive shaft axis of rotation varies the tension in the belt.

5. The abrasive saw in accordance with claim 4 wherein the drive belt (74) is a toothed belt and wherein a toothed wheel (36) is mounted to the drive shaft (26) and the drive wheel (72) is a toothed wheel.

6. The abrasive saw in accordance with claim 1, including a feed table (18) operably mounted to the base (12), the feed table movable forward and rearward in a direction of rotation of the associated cutting wheel (W);
a drive (82) for moving the feed table (18); and
a controller,
wherein the associated cutting wheel (W) is lockable in the cutting position and the feed table (18), with the object secured thereto, is moved toward the associated cutting wheel to cut the object.

7. The abrasive saw in accordance with claim 6 wherein the controller controls the drive (82) to move the table (18) toward the associated cutting wheel (W).

8. The abrasive saw in accordance with claim 7 including a current sensor circuit, and wherein the current sensor circuit generates a signal to the controller and, upon sensing a predetermined current, the controller slows and/or stops the drive to slow and/or stop movement of the table (18) toward the associated cutting wheel (W).

9. The abrasive saw in accordance with claim 7 wherein the controller includes an input for inputting the speed of the table moving toward the associated cutting wheel.

10. The abrasive saw in accordance with claim 6 including a transverse drive (100) to move the feed table (18) transverse to the direction of rotation of the associated cutting wheel (W).

11. The abrasive saw in accordance with claim 1, including
an enclosure (118) enclosing the cutting assembly, the enclosure having at least one stationary side and an openable front panel (120) and top panel (124), the front panel and the top panel being hingedly mounted to one another to open as a unitary assembly, the assembly openable to provide access to the cutting assembly.

12. The abrasive saw in accordance with claim 11 including at least one wear element (116) disposed on the enclosure aligned with the direction of rotation of the associated cutting wheel.

13. The abrasive saw in accordance with claim 11 including a controller and at least one interlock (138), wherein when the interlock is open, the controller prevents operation of the abrasive saw.

14. The abrasive saw in accordance with claim 11 including a fluid feed (78) to feed fluid to a shroud (76) covering the associated cutting wheel (W).

15. The abrasive saw in accordance with claim 11 wherein a portion of a side panel (152) is operably connected to the front panel (120) and the top panel (124) to open therewith as a unitary assembly.

## Patentansprüche

1. Schleifsäge (10) mit einem zugeordneten Schneidrad (W) zum Schneiden von daran montierten Gegenständen, mit
einer Basis (12) und
einer an die Basis (12) wirkmontierten Schneidanordnung, die eine Schwenkwelle (38), eine an die Schwenkwelle wirkmontierte Antriebswelle (26), einen Antrieb (24) und ein Antriebsrad (72) aufweist, wobei der Antrieb mit der Antriebswelle (26) wirkverbunden ist, die Antriebswelle über ein flexibles Antriebselement (74) mit dem Antriebsrad (72) wirkverbunden ist, um das Antriebsrad zu drehen, wobei das zugeordnete Schneidrad (W) am Antriebsrad (72) montiert ist und die Schwenkwelle (38) schwenkbar ist, um das zugeordnete Schneidrad zwischen einer Schneidposition und einer ausgerückten Position zu bewegen,
wobei die Antriebswelle (26) eine Rotationsachse hat und das Antriebsrad (72) eine Rotationsachse hat, die von der Rotationsachse der Antriebswelle beabstandet ist, und wobei das flexible Antriebselement (74) den Abstand zwischen der Rotationsachse des Antriebsrads und der Rotationsachse der Antriebswelle überspannt und wobei der Abstand zwischen der Rotationsachse des Antriebsrads und der Rotationsachse der Antriebswelle variabel ist, um eine Spannung im flexiblen Antriebselement zu erhöhen oder verringern, **dadurch gekennzeichnet, dass** die Antriebswelle (26) in der Schwenkwelle (38) angeordnet ist und wobei eine Drehung der Schwenkwelle den Abstand zwischen der Rotationsachse des Antriebsrads und der Rotationsachse der Antriebswelle variiert.

2. Schleifsäge nach Anspruch 1, wobei die Schwenkwelle (38) eine Längsachse hat und wobei ein Abstand zwischen der Längsachse der Schwenkwelle und der Rotationsachse des Antriebsrads festgelegt ist.

3. Schleifsäge nach Anspruch 1, wobei die Antriebswelle (26) exzentrisch in der Schwenkwelle (38) angeordnet ist.

4. Schleifsäge nach Anspruch 1, wobei das flexible Antriebselement (74) ein Antriebsriemen ist und wobei durch Variieren des Abstands zwischen der Rotationsachse des Antriebsrads und der Rotationsachse der Antriebswelle die Spannung im Riemen variiert wird.

5. Schleifsäge nach Anspruch 4, wobei der Antriebsriemen (74) ein Zahnriemen ist und wobei ein Zahnrad (36) an der Antriebswelle (26) montiert ist und das Antriebsrad (72) ein Zahnrad ist.

6. Schleifsäge nach Anspruch 1, mit einem an der Basis (12) wirkmontierten Zuführtisch (18), der in einer Drehrichtung des zugeordneten Schneidrads (W) vorwärts und rückwärts bewegt werden kann, einem Antrieb (82) zum Bewegen des Zuführtischs (18) und
einer Steuerung,
wobei das zugeordnete Schneidrad (W) in der Schneidposition verriegelbar ist und der Zuführtisch (18) zusammen mit dem daran befestigten Gegenstand zum Schneiden des Gegenstands zum zugeordneten Schneidrad hin bewegt wird.

7. Schleifsäge nach Anspruch 6, wobei die Steuerung den Antrieb (82) steuert, um den Tisch (18) zum zugeordneten Schneidrad (W) hin zu bewegen.

8. Schleifsäge nach Anspruch 7, mit einer Stromsensorschaltung und wobei die Stromsensorschaltung ein Signal zur Steuerung erzeugt und die Steuerung bei Erfassung eines vorbestimmten Stroms den Antrieb verlangsamt und/oder stoppt, um die Bewegung des Tischs (18) zum zugeordneten Schneidrad (W) hin zu verlangsamen und/oder zu stoppen.

9. Schleifsäge nach Anspruch 7, wobei die Steuerung einen Eingang zum Eingeben der Geschwindigkeit, mit der sich der Tisch zum zugeordneten Schneidrad hin bewegt, aufweist.

10. Schleifsäge nach Anspruch 6, mit einem Querantrieb (100), um den Zuführtisch (18) quer zu der Drehrichtung des zugeordneten Schneidrads (W) zu bewegen.

11. Schleifsäge nach Anspruch 1, mit
einer Einfassung (118), die die Schneidanordnung umschließt und mindestens eine feststehende Seite, eine vordere Platte (120), die sich öffnen lässt, und eine obere Platte (124) hat, wobei die vordere und die obere Platte gelenkig aneinander montiert sind, so dass sie sich als eine einheitliche Anordnung öffnen, wobei die Anordnung geöffnet werden kann, um Zugriff auf die Schneidanordnung zu gewähren.

12. Schleifsäge nach Anspruch 11, mit mindestens einem Verschleißelement (116), das an der Einfassung angeordnet und auf die Drehrichtung des zugeordneten Schneidrads ausgerichtet ist.

13. Schleifsäge nach Anspruch 11, mit einer Steuerung und mindestens einer Verriegelung (138), wobei die Steuerung den Betrieb der Schleifsäge verhindert, wenn die Verriegelung offen ist.

14. Schleifsäge nach Anspruch 11, mit einer Fluidzufuhr (78), um einem das zugeordnete Schneidrad (W) abdeckenden Schutz (76) Fluid zuzuführen.

15. Schleifsäge nach Anspruch 11, wobei ein Abschnitt einer Seitenplatte (152) mit der vorderen Platte (120) und der oberen Platte (124) wirkverbunden ist, so dass er sich damit als eine einheitliche Anordnung öffnet.

## Revendications

1. Scie abrasive (10) ayant un disque de coupe (W) associé pour couper des objets montés sur celui-ci, comprenant :
une base (12) ; et
un ensemble de coupe monté fonctionnellement sur la base (12), l'ensemble de coupe comprenant un arbre pivotant (38), un arbre d'entraînement (26) monté fonctionnellement sur l'arbre pivotant, un entraînement (24), et une roue d'entraînement (72), l'entraînement étant connecté fonctionnellement à l'arbre d'entraînement (26), l'arbre d'entraînement étant connecté fonctionnellement à la roue d'entraînement (72) par un élément d'entraînement flexible (74) de manière à faire tourner la roue d'entraînement, le disque de coupe (W) associé étant monté sur la roue d'entraînement (72), l'arbre pivotant (38) pouvant pivoter de manière à déplacer le disque de coupe associé entre une position de coupe et une position désengagée,
l'arbre d'entraînement (26) ayant un axe de rotation et la roue d'entraînement (72) ayant un axe de rotation espacé d'une certaine distance de l'axe de rotation de l'arbre d'entraînement, et l'élément d'entraînement flexible (74) couvrant la distance entre l'axe de rotation de la roue d'entraînement et l'axe de rotation de l'arbre d'entraînement, et la distance entre l'axe de rotation de la roue d'entraînement et l'axe de rotation de l'arbre d'entraînement étant variable, de manière à augmenter ou diminuer une tension dans l'élément d'entraînement flexible, **caractérisée en ce que**
l'arbre d'entraînement (26) est disposé à l'intérieur de l'arbre pivotant (38) et la rotation de l'arbre pivotant faisant varier la distance entre l'axe de rotation de la roue d'entraînement et l'axe de rotation de l'arbre d'entraînement.

2. Scie abrasive selon la revendication 1, dans laquelle l'arbre pivotant (38) a un axe longitudinal et dans laquelle une distance entre l'axe longitudinal de l'arbre pivotant et l'axe de rotation de la roue d'entraînement est fixe.

3. Scie abrasive selon la revendication 1, dans laquelle l'arbre d'entraînement (26) est disposé de manière excentrique à l'intérieur de l'arbre pivotant (38).

4. Scie abrasive selon la revendication 1, dans laquelle l'élément d'entraînement flexible (74) est une courroie d'entraînement, et dans laquelle la variation de la distance entre l'axe de rotation de la roue d'entraînement et l'axe de rotation de l'arbre d'entraînement fait varier la tension dans la courroie.

5. Scie abrasive selon la revendication 4, dans laquelle la courroie d'entraînement (74) est une courroie dentée et dans laquelle une roue dentée (36) est montée sur l'arbre d'entraînement (26) et la roue d'entraînement (72) est une roue dentée.

6. Scie abrasive selon la revendication 1, comportant une table d'alimentation (18) montée fonctionnellement sur la base (12), la table d'alimentation pouvant être déplacée vers l'avant et vers l'arrière dans une direction de rotation du disque de coupe (W) associé ;
un entraînement (82) pour déplacer la table d'alimentation (18) ; et
un dispositif de commande ;
dans laquelle le disque de coupe (W) associé peut être verrouillé dans la position de coupe et la table d'alimentation (18), avec l'objet fixé sur elle, est déplacée vers le disque de coupe associé pour couper l'objet.

7. Scie abrasive selon la revendication 6, dans laquelle le dispositif de commande commande l'entraînement (82) de manière à déplacer la table (18) vers le disque de coupe (W) associé.

8. Scie abrasive selon la revendication 7, comportant un circuit de capteur de courant et dans laquelle le circuit de capteur de courant génère un signal vers le dispositif de commande, et à la détection d'un courant prédéterminé, le dispositif de commande ralentit et/ou arrête l'entraînement, de manière à ralentir et/ou arrêter le mouvement de la table (18) vers le disque de coupe (W) associé.

9. Scie abrasive selon la revendication 7, dans laquelle le dispositif de commande comporte une entrée pour entrer la vitesse de la table se déplaçant vers le disque de coupe associé.

10. Scie abrasive selon la revendication 6, comportant un entraînement transversal (100) pour déplacer la table d'alimentation (18) transversalement à la direction de rotation du disque de coupe (W) associé.

11. Scie abrasive selon la revendication 1, comportant une enceinte (118) enfermant l'ensemble de coupe, l'enceinte ayant au moins un côté stationnaire et un panneau avant (120) et un panneau supérieur (124) pouvant être ouverts, le panneau avant et le panneau supérieur étant montés de manière articulée l'un à l'autre pour s'ouvrir en tant qu'ensemble unitaire, l'ensemble pouvant être ouvert pour fournir l'accès à l'ensemble de coupe.

12. Scie abrasive selon la revendication 11, comportant au moins un élément d'usure (116) disposé sur l'enceinte, aligné avec la direction de rotation du disque de coupe associé.

13. Scie abrasive selon la revendication 11, comportant un dispositif de commande et au moins un emboîtement (138), le dispositif de commande empêchant le fonctionnement de la scie abrasive lorsque l'emboîtement est ouvert.

14. Scie abrasive selon la revendication 11, comportant une alimentation en fluide (78) pour alimenter en fluide un cache de protection (76) couvrant le disque de coupe (W) associé.

15. Scie abrasive selon la revendication 11, dans laquelle une portion d'un panneau latéral (152) est connectée de manière fonctionnelle au panneau avant (120) et au panneau supérieur (124) pour s'ouvrir avec eux sous forme d'ensemble unitaire.
